Europäisches Patentamt

European Patent Office

Office européen des brevets

(11) Veröffentlichungsnummer: **0 187 178**
A1

(12) **EUROPÄISCHE PATENTANMELDUNG**

(21) Anmeldenummer: 85100188.3

(22) Anmeldetag: 10.01.85

(51) Int. Cl.⁴: **B 65 G 15/08**
B 65 G 35/00

(43) Veröffentlichungstag der Anmeldung:
16.07.86 Patentblatt 86/29

(84) Benannte Vertragsstaaten:
AT BE CH DE FR GB IT LI LU NL SE

(71) Anmelder: Laib, Wilhelm
Mozartstrasse 28
D-7030 Böblingen(DE)

(72) Erfinder: Laib, Wilhelm
Mozartstrasse 28
D-7030 Böblingen(DE)

(74) Vertreter: Raeck, Wilfrid, Dipl.-Ing.
Moserstrasse 8
D-7000 Stuttgart 1(DE)

(54) Fördereinrichtung.

(57) Fördereinrichtung für Gegenstände von unregelmäßigem Umfang oder für Schüttgut, bestehend aus einem sich in Förderrichtung erstreckenden Trägerrohr (45) das in in einem in sich geschlossenen ringförmigen Schlauch (44) von elastischem Material angeordnet und von diesem an der Innenseite, an der Außenseite sowie an den mit Umlenkeinrichtungen versehenen Stirnenden lose umgeben ist, wobei der Schlauch (44) mit einer gegebenenfalls vorgespannten viskosen Füllmasse gefüllt ist. Auf dens auf der Außenseite des Trägerrohres befindlichen Schlauchbereich wirkt ein Längsantrieb ein, der aus einer oder mehreren den Schlauch mit dem Trägerrohr umfassenden Treibrollengruppen besteht. Jede Treibrolle (30) wirkt mit einem in Raum zwischen Trägerrohr (45) und äußerem Schlauchbereich einzeln gelagerten Stützrollenpaar (52) zusammen.

Fig. 1

EP 0 187 178 A1

DIPL.-ING. WILFRID RAECK
PATENTANWALT
7 STUTTGART 1, MOSERSTRASSE 8 · TELEFON (0711) 244003
TELEX: 7-21/865

0187178

Wilhelm Laib

7030 Böblingen

- L 180 -

# F Ö R D E R E I N R I C H T U N G

Die Erfindung betrifft eine Fördereinrichtung für beliebiges
Gut, auch Schüttgut, insbesondere für Gegenstände von unregelmäßigem Umfang.

In verschiedenen Techniken besteht unter bestimmten Umständen
das Problem, Gegenstände, auch solche mit unregelmäßigem
Umfang, gegebenenfalls in schneller Folge, zwischen auf verschiedener Höhe liegenden Ebenen zu befördern. Bei geneigten
Förderwegen sind zu diesem Zweck Förderbänder bekannt, während
man bei senkrechten Förderwegen Aufzüge einsetzen muß, die
jedoch aufgrund ihrer praktisch unumgänglichen ortsfesten
Installation besondere bauseitige Voraussetzungen und einen
verhältnismäßig hohen Aufwand erfordern.

Ein Ziel der vorliegenden Erfindung besteht deshalb in der
Schaffung einer Fördereinrichtung, die in der Lage ist,
Gegenstände beliebiger Art, auch solche von unregelmäßigem
Umriß, gegebenenfalls auch Schüttgut, sicher zu erfassen,
um sie je nach dem Verlauf der Fördereinrichtung, gegebenenfalls nach senkrechter Förderung auf einer anderen Ebene
abzusetzen bzw. abzugeben.

Dabei soll der bauliche Aufwand im Vergleich zu Aufzügen
und anderen ähnlichen mechanischen Fördereinrichtungen
niedrig bleiben.

-/-

Die zu befördernden Gegenstände sollen mit sicherem Griff
erfaßt und dennoch schonend bewegt und transportiert werden
können.

Gemäß einem weiteren Ziel der Erfindung soll eine Fördereinrichtung geschaffen werden, mit der sich Gegenstände
beliebiger Art zwischen zwei Räumen befördern lassen, in
denen sich unterschiedliche Drücke und/oder unterschiedliche
Medien befinden. Die Fördereinrichtung muß in diesem Fall
gleichzeitig die Funktion einer Schleuse übernehmen, die
den Druckausgleich verhindert bzw. auf einem zulässigen
Minimalwert hält.

Um die beschriebenen Ziele zu erreichen, ist eine Fördereinrichtung der eingangs angegebenen Art gemäß der Erfindung
dadurch gekennzeichnet, daß ein Trägerrohr von etwa flachrundem bis kreisförmigem Querschnitt in einem in sich geschlossenen ringförmigen Schlauch aus elastischem Material
angeordnet und von diesem an der Innenseite, an der Außenseite und an den mit Umlenkeinrichtungen versehenen
Stirnenden mit Abstand lose umgeben ist, wobei der Schlauch
eine viskose Füllmasse enthält und auf seinen auf der
Außenseite des Trägerrohres befindlichen Bereich ein Längsantrieb wirkt, der aus mindestens einer auf einer Halteeinrichtung gelagerten und das Trägerrohr umfassenden
Treibrollengruppe besteht, von der jede Treibrolle mit
einem zugeordneten gegenüberliegenden Stützrollenpaar zusammenwirkt, das aus im Raum zwischen Trägerrohr und dem
äußeren Schlauchbereich einzeln gelagerten Stützrollen
besteht.

Ein vorteilhafter Gesichtspunkt der Fördereinrichtung
nach der Erfindung ergibt sich aus der Flexibilität, mit der das Trägerrohr, falls erforderlich oder erwünscht,
ausgestattet werden kann. Das vorzugsweise formhaltendelastisch ausgeführte Trägerrohr besitzt in Anpassung an
die zu befördernden Gegenstände einen in jedem Fall
abgerundeten, jedoch entweder flachrunden oder kreisförmigen Querschnitt.

Die Länge des Trägerrohres und des dieses umschließenden
Schlauches ist nicht begrenzt und kann je nach Güte und
Elastizität des Schlauchmaterials mehrere Meter betragen,
wobei für solche größeren Längen unter Abständen zueinander
mehrere Treibrollengruppen vorgesehen sein können.

Ein weiterer vorteilhafter Gesichtspunkt besteht in der
Möglichkeit, das Trägerrohr auch um Biegungen herumzuführen,
denen der elastische Schlauch durch entsprechend angeordnete Treib- und Stützrollengruppen ohne weiteres folgt,
wobei die Elastizität des Schlauches im Innern der Fördereinrichtung ausreicht, um die erfaßten Gegenstände schonend
um die Biegungen herumzufördern. Die Fördereinrichtung kann
zusammen mit der sie tragenden Halteeinrichtung, auf dem
sich der Antrieb befindet, fahrbar oder tragbar gestaltet
sein, um bei Bedarf eingerichtet bzw. aufgestellt zu
werden.

Eine besonders vorteilhafte Anwendung der erfindungsgemäßen
Fördereinrichtung ergibt sich als Schleuse zur abgedichteten
Überführung von Gegenständen zwischen zwei durch eine Wand
oder mehrere Wände getrennten Räumen, die mit flüssigen
und/oder gasförmigen Medien von gegebenenfalls unterschiedlichem Druck gefüllt sind.

-/-

Bei dieser Anwendung legt sich der unter der Spannung
der gegebenenfalls unter Überdruck eingefüllten viskosen
Füllmasse stehende innere Schlauchbereich fest an den
zu befördernden Gegenstand und sorgt somit für eine wirksame Abdichtung.

Die Abdichtung an der Außenseite des Schlauches erfolgt
durch eine in einer entsprechenden Wandöffnung angeordnete
stationäre Dichtung. Die Abdichtung am äußeren Schlauchbereich erfolgt ohne Schwierigkeiten, da die Fördereinrichtung dort gleichmäßige oder wenigstens gleichbleibende
Abmessungen aufweist. Dem äußeren Schlauchbereich kann
eine entsprechend bemessene stationäre Dichtung in der
Wandöffnung, zum Beispiel eine Spaltlippendichtung, zugeordnet sein. Der Halterahmen der Fördereinrichtung, der
die Treibrollen und deren Antrieb trägt, kann bei einer
Ausführungsform fest mit der Trennwand verbunden sein.

Zweckmäßigerweise ist die viskose Füllmasse im Innern des
Schlauches in solcher Menge vorgesehen und steht unter
solchem Druck, daß die im Trägerrohr befindlichen Schlauchbereiche normalerweise elastisch gegeneinander gepreßt sind
und somit die mittlere Durchgangsöffnung abdichten.

Die Abdichtung der durch eine Wand hindurchgeführten
Fördereinrichtung gemäß der Erfindung mittels einer in der
Wandöffnung bzw. davor und/oder dahinter angeordneten
Dichtung gestaltet sich insofern verhältnismäßig einfach
und zuverlässig, als im Bereich dieser Dichtung der äußere
elastische Schlauchbereich fest gegen das Trägerrohr angedrückt werden kann, so daß von dem formstabilen Trägerrohr her ausreichende Abstützkräfte zur Verfügung stehen, um im Zusammenwirken mit dem elastischen Schlauchmaterial
und der dort außen anliegenden Dichtung, z.B. einer
Spaltringdichtung ein genügend hoher Dichtdruck bzw.
Anpreßdruck entstehen kann.

Um den Reibeingriff der Treibrollen mit dem zu bewegenden
Gummischlauch zu verbessern, können die Treibrollen mit
Längsrippen oder mit Noppen ausgestattet sein, während
bei konkavem Rollenprofil außerhalb des Kontaktbereiches
mit den Stützrollen glattwandige Führungsabschnitte vorgesehen sein können, die mit den direkt am Umfang des
Trägerrohres anliegenden Schlauchabschnitten in Eingriff
stehen.

Weitere Merkmale und Vorteile ergeben sich aus der nachfolgenden Beschreibung eines Ausführungsbeispieles der
erfindungsgemäßen Fördereinrichtung in Verbindung mit den
Zeichnungen, die wesentliche Einzelheiten zeigt, und aus
den Ansprüchen. Die einzelnen Merkmale können einzeln für
sich oder zu mehreren in beliebiger Kombination bei einer
Ausführungsform der Erfindung verwirklicht sein.

Es zeigen

     Fig. 1    eine weitgehend schematische Ansicht einer
               Fördereinrichtung nach der Erfindung
               gemäß einem Längsschnitt,

     Fig. 2    einen senkrechten Schnitt nach der
               Linie II - II in Fig. 1 - und

     Fig. 3    einen Querschnitt ähnlich Fig. 2 durch eine
               Fördereinrichtung mit einer Treibrollenanordnung gemäß einer anderen Ausführungsform.

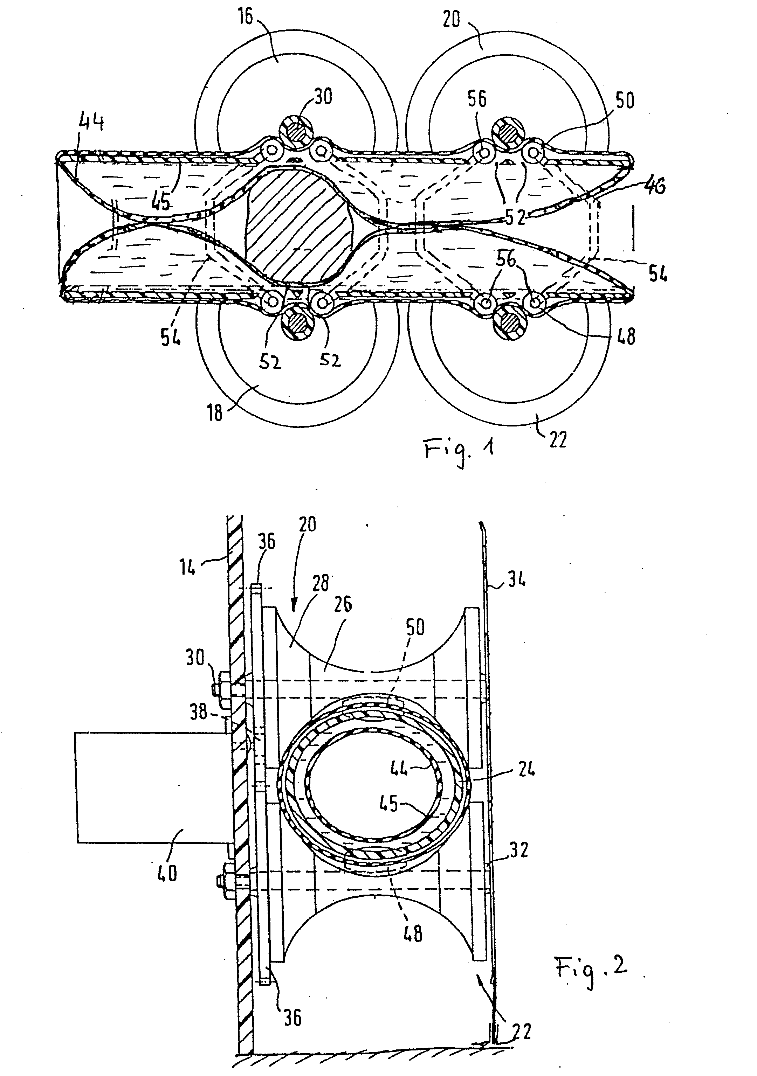

Auf einer zum nichtdargestellten Halterahmen der Fördereinrichtung gemäß der Erfindung gehörenden Montageplatte 14
sind gemäß Fig. 1 und 2 zwei Treibrollenpaare mit Treibrollen 16,18,20,22 drehbar gelagert. Die Treibrollen besitzen eine konkave Mantelfläche, die ungefähr dem Kreis-
oder Ellipsenquerschnitt eines weiter unten beschriebenen
Trägerrohres 24 angepaßt ist. Diese Mantelfläche ist
gemäß Fig. 2 in einen zum Beispiel mit Noppen oder sich
ungefähr in Axialrichtung erstreckenden Längsrippen versehenen Mantelbereich 26 sowie in äußere glattwandige Mantelbereiche 28 gegliedert.

Zur Lagerung der Treibrollen können in der Montagewand 14
befestigte Achsen 30 vorgesehen sein, die entweder freitragend vorstehen oder in einer vom Halterahmen ausgehenden
zweiten Montagewand 34 zusätzlich unterstützt sind. Gemäß
Fig. 2 ist eine Gegenhaltebasis 34 angedeutet, in der nichtgezeigte Vertiefungen zur Aufnahme zentrischer Vorsprünge 32
der Treibrollen dienen.

An der einen Stirnseite tragen die Treibrollen jeweils
ein Stirnzahnrad 36, über das sie gemäß Fig. 1 mit einem
Ritzel 38 eines beliebigen geeigneten Antriebs 40 in Eingriff
stehen. Gleichzeitig können auch die Stirnräder 36 der
einander gegenüberliegenden Treibrollen 16 - 18 sowie 20 - 22
miteinander in Eingriff stehen.

Durch den von den Treibrollenpaaren 16 - 18 und 20 - 22
jeweils umschlossenen Raum erstreckt sich ein Trägerrohr 24,
das aus formstabilem Kunststoffmaterial bestehen kann,
welches eine gewisse elastische Verformbarkeit besitzt.

Das Trägerrohr 24 ist von einem einzigen, in sich geschlossenen ringförmigen Gummischlauch 24 umgeben. Zur
Veranschaulichung kann man diesen Schlauch mit dem eines
Autoreifens vergleichen, der einen in sich geschlossenen
Ringraum enthält. Innerhalb dieses Ringraumes, der bei
der Fördereinrichtung eine beträchtliche axiale Länge
besitzen kann, befindet sich das Trägerrohr 24 sowie eine
gleitfähige viskose Füllmasse, zum Beispiel Glyzerin, die
je nach den Erfordernissen und den Elastizitätseigenschaften
des Schlauches gegebenenfalls unter einem Überdruck steht.

Das Trägerrohr ist an den Stirnseiten entweder mit glattwandigen Umlenkbereichen oder ringsum mit Umlenkrollen
ausgestattet, so daß es praktisch keine Schwierigkeiten
bereitet, den Gummischlauch 44 auf der Außenseite in einer
Richtung zu verschieben, während der sich im Innern des
Trägerrohres befindliche Schlauchbereich in der entgegengesetzten Richtung bewegt und dabei seine Förderfunktion ausübt. Auf diese Weise vollzieht der Gummischlauch eine Umlaufbewegung um das Trägerrohr.

Auf dem Trägerrohr und innerhalb des Gummischlauches 44
sind gemäß Fig. 1 mit Hilfe von am Trägerrohr lösbar gehalterten Federbügeln 46 Stützrollenpaare 48,50 gelagert.
Dabei sind jeder Treibrolle zwei Stützrollen zugeordnet,
die ein konvexes Profil in Anpassung an die konkave Krümmung
der Treibrollen haben und vorzugsweise in quer über den
Umfang verlaufenden Ausschnitten 52 des Trägerrohres
schwimmend aufgenommen und gegen Längsverschiebungen gehalten
sind.

Gemäß Fig. 1 sind je eine untere Stützrolle 48 und eine
am Trägerrohr etwa diametral gegenüberliegende obere Stützrolle 50 auf einem gemeinsamen Federbügel 46
gelagert. Der Federbügel besitzt geradlinige obere und
untere Achsabschnitte 56, auf denen die Stützrollen gelagert sind. An die Achsabschnitte 56 schließen sich eng
am Trägerrohr 24 anliegende gekrümmte Abschnitte 54 an,
so daß gemäß Fig. 1 Bügel entstehen, deren konkave Seite
einer beide Achsen 30 des zugeordneten Treibrollenpaares
20 - 22 enthaltenden gemeinsamen Ebene zugekehrt ist.

Die gekrümmten Bügelabschnitte 54 können in nicht gezeigten Ansätzen des Trägerrohres rastend gehaltert sein. Bei
einer Ausführungsform können die gezeigten Federbügel 46
sich durchgehend von der einen bis auf die andere Seite
des Trägerrohres erstrecken.

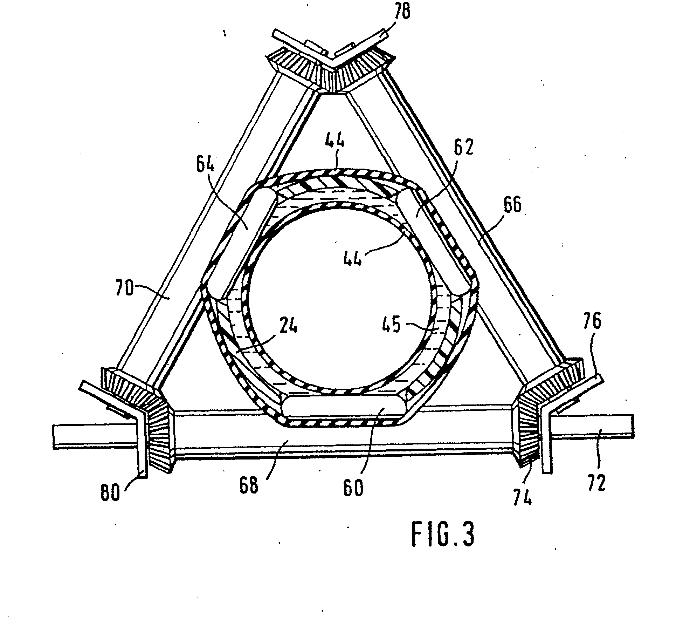

Fig. 3 zeigt eine Ausführungsform für eine andere Anordnung
von Treibrollen. Auf dem Trägerrohr 24 sind wie zuvor innerhalb des Gummischlauches 44 Stützrollenpaare 60,62,64
gelagert, von denen jeweils nur eine Stützrolle jedes Paares
sichtbar ist. Die Stützrollen sind zum Beispiel mit angeformten Lagerzapfen in erhöhten Ansätzen oder Aufbiegungen
des Trägerrohres gelagert, wobei sie sich ähnlich wie
zuvor jeweils durch Ausschnitte im Umfang des Trägerrohres
in Sehnenrichtung erstrecken.

Den zueinander um jeweils 120° über den Umfang versetzten
Stützrollenpaaren 60,62 und 64 ist jeweils eine zylindrische
Treibrolle 66,68 bzw. 70 zugeordnet, die mit dem auf dem
Umfang des Trägerrohres 24 gleichmäßig abgestützten Gummischlauch 44 an drei Stellen in Antriebseingriff stehen.
Auf den Treibrollenwellen 72 sind beiderseits der Treibrollen jeweils Kegelzahnräder 74 befestigt, so daß die

-/-

paarweise einen Winkel von 60° zueinander bildenden
Treibrollen über die miteinander in Eingriff stehenden
Kegelzahnräder bezüglich des Trägerrohres sämtlich in
der gleichen Richtung drehen.

Die Wellenzapfen benachbarter Treibrollen sind in der
Nähe der Kegelräder 74 in Längsrahmenteilen 76,78,80
gelagert die mittels außerhalb der Zeichenebene liegender
Verstrebungen mit dem versteiften Halterahmen verbunden
sind. Auf beiden Seiten der Treibrollenwelle 72 können
nichtgezeigte Treibzahnräder sitzen, die von Antriebsritzeln eines zum Beispiel darunter angeordneten Motors
aus angetrieben werden. Obwohl im Prinzip eine Treibrollengruppe gemäß Fig. 3 für den Antrieb des Schlauches ausreicht, werden vorzugsweise mindestens zwei Treibrollengruppen vorgesehen, bei größeren Längen der Fördereinrichtung
auch eine vergrößerte Anzahl. Im Fall der Anwendung der
Fördereinrichtung als Schleuse können, falls erforderlich,
zu beiden Seiten der Trennwand oder des zu überbrückenden
Raumes getrennte Treibrollengruppen auf besonderen Halterahmen vorgesehen sein.

Aus Gründen der vereinfachten Darstellung ist in Fig. 2
und 3 angenommen, daß mit der Fördereinrichtung gerade ein
Körper mit elliptischem bzw. kreisförmigem Umriß von dem
Innenbereich des Schlauches 44 erfaßt und transportiert
wird. In Längsbereichen, die außerhalb der jeweiligen
Zeichenebene liegen, sorgt die im Innern des Schlauches
in solcher Menge bzw. unter solchem Druck stehende viskose
Füllmasse dafür, daß der aufgrund seiner eigenenElastizität
sich ohnehin auf einen geringeren Querschnitt verengende
Innenbereich des Schlauches abdichtend gegeneinander gedrückt wird, und zwar mindestens im Fall der Anwendung
als Schleuse, so daß mindestens immer auf einer Seite
vor oder hinter dem zu befördernden Gegenstand der
schlauchförmige Förderkanal dicht geschlossen ist.

Die erfindungsgemäße Fördereinrichtung kann grundsätzlich
auch zur Energie- bzw. Kraftübertragung eingesetzt werden,
wobei die beispielsweise an einem Ende der Fördereinrichtung
mittels Treibrollen in den Gummischlauch eingeleitete
Bewegungsenergie an beliebiger anderer Stelle bzw. am
anderen Ende angenommen wird, sei es in Form von Reibungsenergie oder Bewegungsenergie, zum Beispiel mit Hilfe der
Anwendung von Reibrädern oder Reibrollen. - Anstelle der
Treibrollenanordnung nach Fig. 3, bei der die Treibrollen
66,68,70 wie ein gleichschenkeliges Dreieck zueinander
verlaufen, können, insbesondere bei größeren Durchmessern
des Trägerrohres, ähnliche Anordnungen zum Beispiel in
Form eines Fünfeckes oder eines anderen Polygons benutzt
werden, wobei natürlich auch die Stützrollenpaare entsprechend häufiger über den Umfang des Trägerrohres verteilt sind.

Wilhelm Laib                                    - L 180 -

A N S P R Ü C H E

1. Fördereinrichtung für beliebiges Gut, auch
   Schüttgut, insbesondere für Gegenstände von
   unregelmäßigem Umfang,
   d a d u r c h   g e k e n n z e i c h n e t,
   daß ein sich in Förderrichtung erstreckendes
   Trägerrohr von etwa flachrundem bis kreisförmigem Querschnitt in einem in sich geschlossenen ringförmigen Schlauch aus elastischem
   Material angeordnet und von diesem sowohl an
   der Innenseite als auch an der Außenseite
   einschließlich an seinen mit Umlenkeinrichtungen
   versehenen Stirnenden mit Abstand lose umgeben
   ist,
   daß der Schlauch eine den Abstand zum Trägerrohr nach innen und nach außen aufrechterhaltende
   viskose Füllmasse enthält,
   daß auf den auf der Außenseite des Trägerrohrs
   befindlichen Abschnitt des Schlauches ein Längsantrieb wirkt, der aus mindestens zwei auf einer
   Halteeinrichtung gelagerten und das Trägerrohr
   umfassenden Treibrollengruppen besteht, und daß
   jede Treibrolle mit einem zugeordneten, gegenüberliegenden Stützrollenpaar zusammenwirkt,
   das aus im Raum zwischen Trägerrohr und dem
   äußeren Schlauchbereich einzeln gelagerten Stützrollen besteht.

2. Fördereinrichtung nach Anspruch 1, dadurch
gekennzeichnet, daß die quer zur Förderrichtung
gelagerten Treibrollen an wenigstens einer Stelle
rund um die Außenseite des Schlauches angeordnet
sind und gegen den Umfang der den Treibrollen angepaßten Stützrollen und gegen den dazwischenliegenden
Schlauch angepreßt gehalten sind.

3. Fördereinrichtung nach Anspruch 1, dadurch
gekannzeichnet, daß die Stützrollen einen konvexen
Mantel in Anpassung an eine konkave Krümmung der
Treibrollen aufweisen und in querverlaufenden Ausschnitten innerhalb des Trägerrohres gelagert sind,
so daß das Trägerrohr dadurch gleichzeitig gegen
Längsverschiebungen gesichert ist.

4. Fördereinrichtung nach Anspruch 1 oder 2, dadurch
gekennzeichnet, daß an wenigstens drei gleichmäßig
über den Umfang des Trägerrohres verteilten Stellen
Stützrollen in angeformten Ansätzen paarweise jeweils
in Zuordnung zu einer dazu parallel verlaufenden und
an der Außenseite des Schlauches anliegenden Treibrolle gelagert sind.

5. Fördereinrichtung nach Anspruch 4, dadurch gekennzeichnet, daß die Treibrollen an ihren Enden durch
Kegelzahnräder miteinander antriebsmäßig gekoppelt
und in einem das Trägerrohr wenigstens im Bereich
der Treibrolle umschließenden Halterahmen gelagert
und abgestützt sind.

-/-

6. Fördereinrichtung nach einem der vorhergehenden Ansprüche, dadurch gekennzeichnet, daß die die Fördereinrichtung jeweils im wesentlichen umschließenden Treibrollengruppen von einem Antrieb, beispielsweise einem Elektromotor, gegebenenfalls mit Untersetzungsgetriebe aus angetrieben sind, die auf dem Halterahmen angeordnet und mit einer jeder Treibrollengruppe über wenigstens ein Zahnrad in Getriebeeingriff stehen.

7. Verwendung der Fördereinrichtung nach einem der vorhergehenden Ansprüche 1 bis 6 als Schleuse zur abgedichteten Überführung von Gegenständen insbesondere zwischen zwei durch eine Wand getrennten Räumen, die mit flüssigem und/oder gasförmigem Medium von gegebenenfalls unterschiedlichem Druck gefüllt sind, wobei die Außenseite des Schlauches durch eine an bzw. in einer entsprechenden Wandöffnung angeordnete stationäre Dichtung abgedichtet hindurchgeführt ist und mindestens eine Halteeinrichtung mit einem Antrieb für eine Treibrollengruppe an der Trennwand befestigt sind.

8. Fördereinrichtung nach einem der vorhergehenden Ansprüche 1 bis 7, dadurch gekennzeichnet, daß die viskose Füllmasse im Innern des Schlauches in solcher Menge vorgesehen ist und unter solchem Druck steht, daß die im Innern des Trägerrohres befindlichen Schlauchabschnitte normalerweise elastisch gegeneinander gepreßt sind und somit die mittlere Durchgangsöffnung abgedichtet ist.

-/-

0187178

9. Fördereinrichtung nach Anspruch 7 oder 8,
   dadurch gekennzeichnet, daß auf die Außenseite des
   Schlauches zu beiden Seiten der Trennwand bzw. des
   zu überbrückenden Raumes jeweils mindestens eine
   Treibrollengruppe einwirkend mit unabhängigen
   Halterahmen vorgesehen sind.

10. Fördereinrichtung nach einem oder mehreren der
    vorhergehenden Ansprüche, dadurch gekennzeichnet,
    daß der im Bereich seines einen Endes angetriebene
    endlose elastische Schlauch zur Energieübertragung
    herangezogen wird, die insbesondere durch Reibung
    oder über Reibrollen oder Reibräder im Bereich
    des anderen Endes der Fördereinrichtung abgenommen
    wird.

0187178

Fig. 1

Fig. 2

FIG.3

# Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | GB-A-2 116 138 (MINOVITCH) * Zusammenfassung; Figuren 2c,3,6 * | 1,2 | B 65 G 15/08 B 65 G 35/00 |
| | --- | | |
| Y | US-A-4 373 625 (PARSONS) * Figuren 2D-5B; Spalte 3, Zeile 57 - Spalte 4, Zeile 13 * | 1,2 | |
| | --- | | |
| A | US-A-4 174 033 (PARSONS) * Figur 2; Spalte 3, Zeilen 45-60 * | 3,5 | |
| | ----- | | |

RECHERCHIERTE SACHGEBIETE (Int. Cl.4)

B 65 G 15
B 65 G 35

Der vorliegende Recherchenbericht wurde für alle Patentansprüche erstellt.

| Recherchenort DEN HAAG | Abschlußdatum der Recherche 21-08-1985 | Prüfer MORRIS A.A. |
|---|---|---|

KATEGORIE DER GENANNTEN DOKUMENTEN
X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument

EPA Form 1503 03 82